Europäisches Patentamt

European Patent Office

Office européen des brevets

(19)

(11) Publication number: **0 079 242**
**A2**

(12) # EUROPEAN PATENT APPLICATION

(21) Application number: **82305970.4**

(22) Date of filing: **09.11.82**

(51) Int. Cl.³: **A 23 F 5/48**

(30) Priority: **09.11.81 US 319545**
**09.11.81 US 319546**

(43) Date of publication of application:
**18.05.83 Bulletin 83/20**

(84) Designated Contracting States:
**AT BE CH DE FR GB IT LI LU NL SE**

(71) Applicant: **GENERAL FOODS CORPORATION**
**250 North Street**
**White Plains, N.Y. 10625(US)**

(72) Inventor: **Pitchon, Esra**
**73-15 186 Street**
**Flushing New York 11366(US)**

(72) Inventor: **Chang, Peter W.**
**262 Treetop Circle**
**Nanuet New York 10954(US)**

(74) Representative: **Baillie, Iain Cameron et al,**
**c/o Ladas & Parry Isartorplatz 5**
**D-8000 München 2(DE)**

(54) **Process for obtaining coffee grinder gas-like aroma frost.**

(57) Grinder gas-like aroma is obtained during the wetting of roasted coffee under a vacuum of at least 500 mm Hg. A bed of roasted coffee is placed under vacuum and contacted with water, roasted coffee extract or steam. The vapor thereby given off is passed through a condenser to remove water and condensible aroma compounds, compressed and collected as a grinder gas-like frost in a very low temperature trap.

EP 0 079 242 A2

Croydon Printing Company Ltd.

Case 2876/2877

## PROCESS FOR OBTAINING COFFEE GRINDER
## GAS-LIKE AROMA FROST

### Background of the Invention

The present invention relates to the production of a grinder gas-like aroma frost which may be incorporated into soluble coffee production for aromatization of the coffee. More particularly, the invention relates to contacting a bed of roasted coffee with water, aqueous coffee extract or steam under a vacuum. The vapors generated by this method are dried, compressed and collected in a liquid nitrogen trap as a grinder gas-like frost.

The art establishes that freshly roasted coffee evolves a vapor upon atmospheric wetting, such as wetting roasted and ground coffee with extract prior to percolation. However, such vapor, known as vent gas, essentially consists of carbon dioxide that has been displaced from the coffee particle by the absorbed water. The evolved vapor is substantially lacking in any important aroma constituents and such aroma constituents as are found in vent gas are in relative proportions disadvantageously different from grinder gas aroma. The present invention, by contacting the roasted coffee with liquid or steam under a relatively high vacuum, surprisingly produces a vapor with sensory aroma impact that is equivalent to a grinder gas aroma which is produced from a coffee having under 3% by weight moisture. It is believed that the vacuum causes flashing of the liquid to a vapor as it enters the vessel containing the coffee, providing for a concurrent low temperature steaming effect during wetting. The same effect is achieved by introducing low temperature steam into the vessel maintained under a vacuum.

This invention is unlike prior art disclosed in U.S. Pat. No. 3,700,463 to Bolt et al. wherein the steam phase is produced in the vessel by operating at a higher pressure but which steam phase is maintained throughout the percolation cycle rather than just during wetting. Further, said prior art disclosed the desirabilty of not obtaining any aroma constituents thereby evolved as a frost, but rather retaining such compounds in the extract with which the coffee is being extracted. The present invention provides for production of a grinder gas-like aroma frost from vapors evolved during wetting or steaming of roasted coffee under vacuum.

Grinder gas aroma is the aroma normally noticed when freshly roasted coffee is ground. Said grinder gas is liberated in greater quantities as the moisture of the freshly roasted coffee decreases. As commercially produced presently, grinder gas liberated at the coffee grinders consists of at least 80% by weight air and no greater than 20% by weight coffee aroma compounds, the bulk of which is carbon dioxide. The grinder gas is captured in a liquid nitrogen trap, described in Canadian Pat. No. 1,002,376 to Winter, et al., as a frost consisting principally of solid carbon dioxide with a low concentration of coffee aroma compounds. Despite the low concentration, the sensory aroma impact of the grinder gas frost is very great as said aroma compounds are extremely active on the senses even at such low concentration.

It is the principal object of this invention to produce a grinder gas-like aroma frost that may be incorporated into the production of a soluble coffee with an enhanced aroma.

A further object of the present invention is to provide a water condensate containing condensible aroma compounds as a by-product of the grinder gas-like aroma frost process, which condensate may be incorporated into the production of a soluble coffee with an enhanced flavor and aroma.

## Summary of the Invention

This invention relates to a process for producing a grinder gas-like aroma frost which may be incorporated into soluble coffee. A bed of roasted coffee is placed under at least a 500 mm Hg vacuum (260 mmHg absolute) and contacted with water, aqueous coffee extract or steam and the vessel is thus maintained preferably at about 82°C to about 102°C. The vapor thereby evolved is passed through a condenser at approximately 0°C in order to remove water and condensible aroma compounds. The substantially water free non-condensible vapor is compressed to essentially atmospheric pressure and collected in a liquid nitrogen trap as a grinder gas-like frost.

The water bearing the condensed aroma compounds is similar to the condensate derived by steaming coffee at or above atmosphere pressure and may be added to a soluble coffee extract to enhance flavor and aroma upon drying. The grinder gas-like aroma frost may be folded into expressed, clarified coffee oil which is then plated onto soluble coffee powder to enhance the product aroma. The grinder gas-like aroma frost may also be added directly to a soluble coffee extract to enhance flavor and aroma upon drying.

## Detailed Description of the Invention

The term "grinder gas-like aroma" frost is intended to mean the frost produced by the present invention which bears a strikingly similar sensory aroma impact to the grinder gas aroma frost hereinbefore described. The similarity of grinder gas aroma and grinder gas-like aroma is unexpected considering grinder gas aroma is most fully liberated by grinding low moisture roasted coffee whereas grinder gas-like aroma is obtained by wetting roasted coffee under vacuum.

Though having similar aroma impact, grinder gas-like aroma differs from grinder gas aroma in an advantageous way. As noted above, grinder gas aroma consists of at least 80% by weight air and not more than 20% by weight coffee aroma compounds. The grinder gas-like aroma of the present invention consists of from 50% by weight to 70% by weight air and between 30% by weight and 50% by weight coffee aroma compounds, principally carbon dioxide. Therefore, considerably less total gas containing the grinder gas-like aroma may be processed to yield as much frost as a given amount of total gas containing the grinder gas aroma. Since frost production uses costly liquid nitrogen, such a reduction in processing represents a significant economic benefit for the present invention.

The object of the invention may be met by contacting a bed of either roasted whole beans or roasted and ground coffee particles with a liquid or steam under a vacuum. It is preferred to wet roasted and ground coffee particles because such particles have a greater surface area and less resistance to the exchange of vapor and liquid across the particle surface. An additional advantage of using roasted and ground coffee particles is the ease with which the overall process can then be integrated into the soluble coffee percolation operation when said roasted and ground coffee particles are used.

The process of the present invention is ideally suited for integration into the percolation operation. Such percolation is commercially carried out in a counter-current extraction battery wherein the spent column of the train (the column containing .the most extracted coffee) is contacted with feedwater at approximately 180°C and the aqueous coffee extract is drawn from the freshest column for the appropriate cycle time, usually less than 60 minutes. When a given cycle is complete, the spent column is isolated from the battery and the flow of extract is directed to a column containing freshly roasted and ground coffee. The percolation operation is set forth fully in U.S. Pat. No. 2,915,399 to Guggenheim et al.

In the case of contact with a liquid, the process of the invention is adaptable to the percolation operation as follows. A percolation column is charged with a bed of roasted and ground coffee while isolated from the other columns of the battery. A vacuum of from 500 mm Hg to 740 mm Hg (20mm Hg to 260 mm Hg absolute) is drawn on the column. The flow of extract is diverted to the column under vacuum at the end of the proper cycle. Vacuum is maintained on said column until the level of extract reaches the top of the column at which time vacuum is released. The draw off from the column is then directed to the draw-off tank as per usual operation. The only appreciable difference from the standpoint of percolation operation is the vacuum that is drawn while the fresh column is wetting. The flavor and aroma of the resulting extract are essentially unaffected by the process. In the case of contact with steam the only appreciable difference from the standpoint of percolation operation is the contact of the roasted coffee with the steam while the charged column stands idle prior to the beginning of the cycle. It a clear advantage of the invention that a relatively minor operating modification permits the production of a grinder gas-like aroma frost where a grinder gas aroma frost is difficult to produce because of the high moisture of the roasted coffee (greater than 7%) used in soluble coffee production.

Though the process is adaptable to percolation, it is in no way limited to use in such an operation. In fact, it is sufficient to contact water or steam with a bed of roasted coffee under a vacuum of at least 500 mm Hg (260 mm Hg absolute) to meet the objects of the invention.

The preferred method of operation for contact with a liquid, however, is contacting the roasted coffee with aqueous coffee extract. The concentration of the aqueous coffee extract is not particularly important. Said concentration of the extract should be below 25% soluble solids by weight though, in order to avoid an excessively high boiling point elevation of such extract, which elevation might require a wetting termperature higher than desirable from the standpoint of quality.

The temperature of the incoming liquid, be it water or aqueous coffee extract, should be confined to a fairly narrow range if proper wetting and con-current grinder gas-like aroma evolution are to be accomplished. As hereinbefore discussed, it is believed that the vacuum causes flashing of the incoming liquid, leading to collateral wetting and low temperature steaming. Therefore, the temperature of the incoming liquid should be at least 82°C if flashing is to be sufficiently maintained. Though there is no upper limit on the temperature of the liquid entering the column, said temperature should preferably not exceed 102°C in the interest of quality. It has been found that a temperature of 96°C is a convenient balance between the two conflicting aims. Maintaining the same temperature range, 82°C to 102°C applies in the case of contact with steam as well.

Maintaining the proper vacuum in the vessel throughout the wetting period is important in achieving the objects of the invention. In a departure from prior art, it has been found that at least a 500 mm Hg vacuum is needed to evolve useful grinder gas-like aroma for the embodiment wherein water or coffee extract contacts the coffee. Though minimum 500 mm Hg (260 mm Hg absolute) vacuum is required, a vacuum of from 560 mm Hg to 740 mm Hg (20 mm Hg to 200 mm Hg absolute) has been found to work well. The preferable vacuum for the steaming embodiment has been found to be between 380 mm Hg and 740 mm Hg (20 mm Hg to 380 mm Hg absolute).

The rate of liquid flow into the vessel, conveniently expressed as column fill time in the case of a percolator, is controlled in order to insure the proper wetting time which wetting time will maximize grinder gas-like aroma development and evolution. Said evolution of the grinder gas-like aroma is in large part an exchange of vapor and liquid across the surface of the coffee particle. The filling period should be such that sufficient time is allowed for said surface phenomena to occur because the yield of grinder gas-like aroma declines as column fill time becomes shorter. It has been found that a column fill time of approximately 10 minutes is an adquate balance between allowing a sufficient period and maintaining process productivity. The target of 10 minutes applies where the weight ratio of liquid to roasted coffee is approximately 1.5 lbs of liquid/ 1 lb. of roasted coffee. If said ratio is significantly different, the appropriate column fill time is proportionately adjusted.

When steam rather than liquid is introduced into the column, steaming should be carried out for a length of time sufficient for proper generation and evolution of the grinder gas-like aroma vapor. The yield of said grinder gas-like aroma vapor is adversely affected if the steaming period is less than 5 minutes. Though there is no upper limit on the time, the interests of quality and productivity dictate that said time be held to the minimum necessary to optimize yield of the grinder gas-like aroma. The steaming period is preferably between 10 minutes and 15 minutes.

Capture of the grinder gas-like aroma as a frost may be carried out by any one of several schemes. The preferred method is to first pass the grinder gas-like aroma vapor through a condenser as said vapor is evolved from the column under vacuum. Such a condenser, maintained at approximately 0°C, removes the water and condensible aroma constituents from the grinder gas-like vapor. The dried vapor is then compressed to essentially atmospheric pressure in the pump that is itself drawing the vacuum on the column. Said compressed grinder gas-like vapor is finally captured as a frost in a liquid nitrogen trap. The preferred trap is a liquid nitrogen cooled scraped surface heat exchanger as set forth in Canadian Pat. No. 1,002,376 to Winter et al.

While it is desirable to dry the grinder gas-like aroma vapor prior to compression in order to avoid fouling the compressor, it is not necessary to do so. It has been found that compressing said grinder gas-like vapor prior to the two step condensation is adequate in accomplishing the objects of the present invention.

Similarly, the grinder gas-like aroma compression step may be omitted entirely without significant adverse impact on the process. However, both the water condenser and the liquid nitrogen trap would have to be increased in capacity to compensate for the difficulty of condensation at reduced pressure. An omission of the compression step would increase processing costs but the objects of the invention could still be met.

A surprising advantage of the present invention is the suitability of the water condensate containing condensible aroma compounds for aromatizing soluble coffee when such condensate is added to aqueous coffee extract prior to drying. Said water condensate, collected at the condenser maintained at approximately 0°C, has been found to be strikingly similar to the condensate obtained by steaming roasted coffee, a process well known in the art. Accordingly, said water condensate may be added to aqueous coffee extract in a manner similar to that used for steam condensate as disclosed in U.S. Pat. No. 3,132,947

-10-

to Mahlmann for purposes of producing an aromatized soluble coffee upon drying.

The grinder gas-like aroma frost may be incorporated into the soluble coffee production process by any of several methods established by the art. For instance, the grinder gas-like aroma frost may be fixed by contact with an oil in a pressure vessel according to U.S. Pat. No. 4,007,291 to Siedlecki et al. or, said frost may be fixed by contact with a glyceride in a pressure vessel as described in U.S. Pat No. 3,939,291 to Katz. Expelled coffee oil is a common fixing agent. The aromatized oil or glyceride obtained by fixing the grinder gas-like aroma frost may be either added to aqueous coffee extract prior to drying or plated onto soluble coffee powder for purposes of aromatizing the finished soluble coffee product. Alternatively, the grinder gas-like aroma frost may be added directly to a chilled or slushed aqueous coffee extract to enhance the flavor and aroma of the finished product.

The following examples more fully illustrate the process.

Example 1

(a)  9.0 kg of roast and ground coffee was loaded into an isolated column of an operating percolator train, which column has a 12.7 cm inner diameter and a 152.4 cm length.

(b)  a vacuum of 560 mm Hg was drawn on the column as measured at the top of the column.

(c)  aqueous coffee extract containing 18% by weight soluble coffee solids was fed to the bottom of the column at a temperature of 96°C.

(d)   the evolving grinder gas-like aroma was passed through a glycol cooled heat exchanger at 0°C under vacuum.

(e)   the nearly water-free grinder gas-like aroma vapor was pressurized to atmospheric pressure and passed through a second condenser maintained at 0°C to remove the last traces of water vapor.

(f)   the water free grinder gas-like aroma vapor was then passed through a liquid nitrogen trap and the frost collected - carbon dioxide concentration was approximately 30%.

(g)   after 10 minutes, the column was full - the aroma collection was halted and vacuum broken on the column.

(h)   normal draw off was commenced when the aroma collection was halted.

The yield of grinder gas-like aroma frost was 2.5 kg/1000 kg of roast and ground coffee. The yield of water condensate was approximately 100 kg/1000 kg of roast and ground coffee. The frost quality was good in comparision to conventional grinder gas aroma frost. The flavor of the base coffee extract was substantially unaffected.

Example 2

(a)   The grinder gas-like aroma frost collected in 1(f) was combined with expressed coffee oil in a Parr bomb at a weight ratio of 2:1 frost to oil.

(b)   The resulting mixture was allowed to warm to room temperature, elevating the pressure in the bomb to approximately 42 atmospheres absolute pressure.

(c) The pressure was slowly released, producing an aromatized expressed coffee oil which was sprayed on dried coffee extract at a level of approximately .5% by weight.

(d) Steps (a) through (c) were repeated using grinder gas frost as the starting material for a control sample. The product of the present invention was judged equal to that of the control in aroma impact and quality and said product had storage stability properties similar to that of the control.

Example 3

(a) 9.0 kg of roast and ground coffee was loaded into a column as in 1(a) above.

(b) steam under a vacuum of 380 mm Hg was fed to the bottom of the column.

(c) the evolving grinder gas-like aroma was passed through a glycol cooled heat exchanger maintained at 0°C under a vacuum.

(d) the nearly water-free grinder gas-like aroma vapor was pressurized to atmospheric pressure and passed through a second condenser maintained at 0°C to remove the last traces of water vapor.

(e) the substantially water free grinder gas-like aroma vapor was then passed through a liquid nitrogen trap and the frost collected. .

(f) after 13 minutes, the steam was shut off and vacuum broken on the column.

(g) the column of roasted coffee was brought on stream in the normal percolation operation.

0079242

-13-

The yield of grinder gas-like aroma frost was 2.5 kg/1000 kg of roast and ground coffee. The yield of water condensate was approximately 100 kg/1000 kg of roast and ground coffee. The frost quality was good in comparison to conventional grinder gas aroma frost. The flavor of the base coffee extract exhibited slightly less of the characteristic sourness of steamed coffee.

Example 4

(a) The grinder gas-like aroma frost collected in 3 was combined with expressed coffee oil in Parr bombs at a weight ratio of 2:1 frost to oil.

(b) The resulting mixture was allowed to warm to room temperature, elevating the pressure in the bomb to approximately 42 atmospheres absolute pressure.

(c) The pressure was slowly released, producing aromatized expressed coffee oil which was sprayed on dried coffee extract at a level of approximately .5% by weight.

(d) Steps (a) through (c) were repeated using grinder gas frost as the starting material for a control sample. The product of the present invention was judged equal to that of the control in aroma impact and quality and said product had storage stability properties similar to that of the control.

C L A I M S

1.  A process for obtaining coffee grinder gas-like aroma frost which comprises:
    (a)  charging a vessel with a bed of roasted coffee;
    (b)  placing said vessel under a vacuum;
    (c)  contacting the roasted coffee with a liquid or steam;
    (d)  passing the vapor evolved from the vessel under vacuum through a condenser at approximately 0°C and collecting the liquid condensate;
    (e)  trapping said vapor as a grinder gas-like frost by passage through a liquid nitrogen trap.

2.  The process of Claim 1 wherein the vacuum is drawn to between 500 mm Hg and 740 mm Hg.

3.  The process of Claim 1 wherein the liquid contacted with the roasted coffee is water entering the vessel at a temperature of at least 82°C and the vacuum is drawn to between 560 mm Hg and 740 mm Hg.

4.  The process of Claim 1 wherein the liquid contacted with the roasted coffee is an aqueous extract of roasted coffee having a concentration of less than 25% by weight soluble solids, said aqueous extract entering the vessel at a temperature of at least 82°C and the vacuum is drawn to between 560 mm Hg and 740 mm Hg.

5.  The process of Claim 1 wherein steam is contacted with the roasted coffee.

6.  The process of Claim 5 wherein a vacuum is drawn to between 380 mm Hg and 740 mm Hg.

7.  The process of Claim 1 or 6 wherein the vessel is an elongated column, which column has a length between 5 and 20 times the width.

8.  The process of Claim 7 wherein the column containing the roasted coffee is the fresh column of a percolator train and contact of the coffee with the aqueous extract under a vacuum comprises the pre-wetting stage of the fresh percolator column prior to extract draw off from said column.

9.  The process of Claim 1 or 6 wherein the bed of roasted coffee consists of roasted whole coffee beans.

10.  The process of Claim 1 or 6 wherein the bed of roasted coffee consists of roasted and ground coffee particles.

11.  The process of Claim 1 or 6 further comprising compressing the substantially water-free vapor exiting the condenser to essentially atmospheric pressure prior to passage through the liquid nitrogen trap.

12.  The process of Claim 11 wherein the compression of the vapor to essentially atmospheric pressure precedes the passage of the vapor through the condenser.

13.  The process of Claim 11 wherein the compression of the vapor is to greater than atmospheric pressure.

14.  A process for producing an aromatized soluble coffee which comprises adding the liquid condensate containing condensible aroma compounds of Claim 1 or 6 to an aqueous extract of roasted coffee and drying said aqueous extract.

15. A process for producing an aromatized soluble coffee which comprises combining the grinder gas-like frost of Claim 1 or 6 with expelled coffee oil and plating said combination on a soluble coffee powder.

16. A process for producing an aromatized soluble coffee which comprises adding the grinder gas-like aroma frost of Claim 1 or 6 to an aqueous extract of roasted coffee and drying said aqueous extract.